# EUROPÄISCHE PATENTSCHRIFT

(11) **EP 1 791 273 B1**
(45) Veröffentlichungstag und Bekanntmachung des Hinweises auf die Patenterteilung: **01.08.2012**
(21) Anmeldenummer: 06023394.7
(22) Anmeldetag: 10.11.2006
(51) Int. Cl.: H04B 10/158

(54) **Verfahren und Vorrichtung zur empfängerseitigen Eliminierung von Störsignalen**
Method and apparatus for eliminating noise at the receiver end
Procédé et appareil pour éliminer le bruit dans un récepteur

(30) Priorität: 28.11.2005 DE 102005056843
(43) Veröffentlichungstag der Anmeldung: 30.05.2007
(73) Patentinhaber: Prof. Dr. Horst Ziegler und Partner GbR, 70499 Stuttgart (DE)
(72) Erfinder: Ziegler, Horst, 33100 Paderborn (DE)
(74) Vertreter: Ostertag, Reinhard

(56) Entgegenhaltungen:
- EP-A- 0 909 046
- US-B1- 6 595 708
- US-B1- 6 963 696

## Beschreibung

Die Erfindung betrifft ein Verfahren zur empfängerseitigen Eliminierung von statischen oder zeitlich langsam veränderlichen optischen oder elektrischen Störsignalen aus Eingangsdatensignalen bei der digitalen Datenübertragung in vorgegebenem Bitraster sowie eine Vorrichtung zur Durchführung eines solchen Verfahrens.

In der US-B1-6963696 ist ein Empfänger für Datenpakete beschrieben, bei dem empfängerseitig statische oder zeitlich langsam veränderliche optische oder elektrische Störsignale aus den Eingangsdatensignalen entfernt werden. Dies erfolgt unter Verwendung der Tatsache, dass die digitale Datenübertragung in vorgegebenem Bitraster erfolgt. Die Unterscheidung der Störsignale und der Nutzsignale erfolgt unter Verwendung eines Hochpassfilters, welches durch einen mit Hysterese behafteten Komparator und ein mit diesem verbundenes RC-Netzwerk gebildet ist. Dabei ist für ein System mit einer Impulsbreite von 6 Nanosekunden die Zeitkonstante des Hochpasses 8,5 Nanosekunden. Der Komparator stellt eine erste Ausgangsspannung bereit, wenn der Unterschied in den Eingangsspannungen kleiner ist als eine erste vorgegebene Spannung und stellt eine zweite Ausgangsspannung bereit, wenn der Unterschied zwischen den Eingangsspannungen größer ist als eine zweite vorgegebene Spannung. Damit arbeitet der Hysterese behaftete Komparator ähnlich wie ein Flipflop mit zwei stabilen Ausgangszuständen.

Die US-B1-6595708 betrifft eine optische Empfängerschaltung, die einen Vorverstärker umfasst, der die Signale eines Fotodetektors erhält. Es sind Schaltkreise vorgesehen, um Maximalpegel positiver und negativer Impulse zu speichern, welche vom Ausgang des Fotodetektors bereitgestellt werden. Durch Berechnung eines Mittelwertes der "1"-signale und der "0"-Signale erhält man einen Referenzwert, anhand dessen das Auftreten von "1"-Signalen und "0"-Signalen erkannt wird.

Die EP-A-0909046 offenbart eine optische Datenübertragangsstrecke mit einem Empfangsteil, bei dem ebenfalls Übertragungsfehler eliminiert werden, die auf niederfrequente Störungen zurüc-zuführen sind. Aus der Höhe der eingegangenen Impulse mit dem logischen Wert "1" und "0" wird wieder ein Mittelwert berechnet, der als Referenzspannung für die spätere Erkennung von "1"-Impulsen und "0"-Impulsen verwendet wird.

Verbrauchsmessgeräte (Heizkostenverteiler, Wasser-, Wärme-Gas- und Stromzähler), aber auch viele andere mobile oder ortsfeste elektronische Geräte mit Netz- oder Batteriebetrieb, benutzen zur Kommunikation mit anderen, insbesondere auch mobilen Geräten, sichtbare oder infrarote Lichtpulse, die meist von Halbleiter-LED's (Light Emitting Diodes) erzeugt werden. Die Empfänger sind meist Fotodioden, Fototransistoren, Fotowiderstände oder Fotozellen.

Eine solche Kommunikationsschnittstelle eines Gerätes besteht wegen der Möglichkeit bidirektionaler Kommunikation meist sowohl aus einem optischen (Infrarot)Sender als auch einem Infrarot-Empfänger. Zur Kommunikation zwischen einem (meist ortsfesten) Endgerät, insbesondere einem Verbrauchszähler, dient dann als Gegenstück meist ein mobiler Optokopf, der die Umwandlung der optischen in elektrische Signale vornimmt und diese dann über ein Kabel oder über Funk an ein mobiles Datenerfassungsgerät weiterleitet.

Beginnend bei optischen Schnittstellen für Elektrozähler hat zunächst der ZVEI (Zentralverband der elektrotechnischen Industrie) begonnen, die mechanischen, optischen, elektrischen und Protokoll-Parameter einer solchen optischen Kommunikationsschnittstelle zu normen. Die optischen Parameter für ortfeste und mobile Komponenten sind dabei symmetrisch ausgelegt.

Diese Normung wurde dann international weitergeführt und ist derzeit in der IEC 62056-21 beschrieben. Die Schnittstelle arbeitet mit dem weit verbreiteten seriellen UART- (Universal asynchronous receiver and transmitter) -Protokoll, in dem Gruppen von 5-9 binäre Datenbits ("Byte") durch ein Startbit (kodiert als "0") und ein bis zwei Stopbits (kodiert als "1") eingerahmt werden und die mit einer festen Taktrate ("Baudrate") meist zwischen 300 und 9600 Baud übertragen werden, deren (Anfangs)-Wert durch die Norm oder durch Vereinbarung festgelegt ist, die aber durch Protokollkommandos auch verändert werden kann.

Bei der genormten Schnittstelle wird das Datenbit "0" als optisches Infrarotsignal im definiertem Helligkeits- und Wellenlängenbereich während der Dauer einer Bitzeit und das Datenbit "1" durch das Fehlen eines solchen optischen für die Dauer einer Bitzeit kodiert.

Im Gegensatz zu der ebenfalls verbreiteten impulskodierten Infrarot-Übertragungstechnik "IRDA" werden die Datenbits also als bitdauerkonstante Pegel und nicht als im Vergleich zur Bitdauer nur kurze Pulse übertragen. Da eine Kette gleichartige "0"-Bits ein optisches Dauersignal für die Dauer der Summe der entsprechenden Bitzeiten erfordert und bei einer Kette von "1"-Bits dementsprechend mehrere Bitzeiten lang kein Signal emittiert wird, wird diese Bitkodierungstechnik auch "NRZ" (Non return to zero) genannt.

Diese (ältere) pegelbasierte ZVEI-Technik lässt sich mit weniger Bauelementeaufwand realisieren als die (neuere) IRDA-Technik. Dazu hin hält ihre weltweite Verbreitung in sehr langlebigen Verbrauchs- (insbesondere Elektrizitätszähler) und in den zugehörigen mobilen Auslesegeräten das Interesse an dieser Art optischer Schnittstelle noch lange wach.

### Probleme bisheriger Lösungsansätze sind:

Bei der Standard-Implementierung für die optischen Empfänger für entsprechend dieser "ZVEI"-Norm kodierte optische Signale wird ein optoelektrischer Detektor (Fotodiode, Fototransistor oder Fotowiderstand) verwendet. Überschreitet sein (meist zur empfangenen Helligkeit proportionales) elektrisches Ausgangssignals eine vorgebbare empfindlichkeits-bestimmende Spannungs- Strom- oder Widerstandschwelle so wird der Logik-Empfänger dies als "0", sonst als "1" erkennen und einer digitalelektronischen Schaltung zur Auswertung der empfangenen Datenbits und zur Rekonstruktion von Datenbytes anhand der Erkennung eines Startbits ("0") nach einem oder mehreren Stopbits ("1") zuführen. Optische Reichweiten sind hier nur im Bereich von cm gefordert, da der mobile Empfänger ("Optokopf") meist direkt auf die Oberfläche des (meist stationären) Verbrauchszählers aufgelegt wird.

Hauptnachteil seitheriger Lösungen sind die begrenzt nutzbare Empfindlichkeit, die sich daraus ergibt, dass Leckströme des Optoempfängers oder Stör- und Fremdlicht aus Dauerlichtquellen (Tageslicht) oder Wechsellichtquellen (Glühlampen oder Leuchtstoffröhrenlicht) eine nicht zu kleine Detektorschwelle erfordern, damit es durch sie nicht zu Störungen der optoelektronischen Übertragung kommt.

Bei pulskodierten optischen Kommunikationsschnittstellen wie beim IRDA-System kann man solche konstante oder im Vergleich zur Bitrate langsam veränderlichen Störsignale z.B. durch Hochpassfilter von den kurzen Pulsen der Nutzsignalpulse abtrennen, da die mittlere Helligkeit des Nutzsignals unabhängig vom Dateninhalt stets nur einen kleinen Bruchteil der Nutzpulshöhe ausmacht (beim IRDA-Verfahren maximal 3/16, also rund 20%).

Bei den pegelbasierten Verfahren wie bei der ZVEI-Schnittstelle ist dagegen die mittlere Signalhöhe in einem Byte extrem datenabhängig und kann zwischen ca. 9% (Nur Startbit, 9 "1"-Bits und 2 Stopbits) und über 91% bei 9 Nutz-"0"-Bits liegen. Die dadurch fehlende analogelektrische Trennbarkeit zwischen konstanten oder langsamen veränderlichen optischen oder elektrischen Störungen ist der Hauptnachteil dieser älteren pegelbasierten Übertragungstechnik der auf ZVEI basierten Norm im Vergleich zu der neueren auf Lichtpulsen basierenden Technik (z.B. IRDA). Als Vorteil der älteren Technik verbleiben die niedrigeren Kosten der erforderlichen Bauelemente und schließlich die sehr große Zahl der weltweit vorhandenen Endgeräte (insbesondere Elektrizitätszähler) und die Verbreitung der zugehörigen Auslesegeräte.

Ziele der Erfindung sind ein Verfahren und eine Vorrichtung, die solche ZVEI-kodierten optischen Datensignal auch in Anwesenheit von konstanten oder langsam veränderlichen optischen oder elektrischen Störsignalen sicher erkennen und detektieren können.

Diese Aufgaben sind erfindungsgemäß gelöst durch ein Verfahren gemäß Anspruch 1 bzw. eine Vorrichtung gemäß Anspruch 11.

Der grundsätzliche Erfindungsgedanken besteht darin, dem analogelektrischen Signal einen Hochpass mit einer Zeitkonstanten, die kleiner, vorzugsweise deutlich kleiner als die Bitzeit ist (5% bis 30% der Bitzeit), nachzuschalten, der das (Rechteck)-Eingangsdatensignal (mit Ein/Aus-Dauern zwischen 1 und 10 Bitzeiten) analogelektrisch differenziert. Dadurch werden alle konstanten oder zeitlich langsam veränderlichen optischen oder elektrischen Störsignale eliminiert.

Das erfindungemäße Verfahren und die erfindungsgemäße Vorrichtung zu seiner Durchführung können ohne zusätzliche Verstärker auskommen und auch allein mit den oft in Mikrokontrollern integrierten analogelektrischen Komparatoren auskommen.

Ein weiterer Vorteil der Erfindung ist der, dass man alternativ oder zusätzlich auch eine kleinere (empfindlichere) Detek-tionsschwelle wählen kann und so die Reichweite der optischen Strecke vergrößern kann.

Vorteilhafte Weiterbildungen der Erfindung sind Gegenstand von Unteransprüchen.

Der Beginn eines oder mehrerer Null-Bits führt durch die Hochpassdifferenzierung zu einem positiven Spannungspuls. Überschreitet dieser positive Spannungspuls eine vorgegebene Empfindlichkeitsschwelle so wird von dem entsprechenden digitalen Komparatorausgang ein Flip-Flop (oder in einem Mikrokontroller ein entsprechendes Bit) gesetzt.

Am Ende eines Rechtecksignals von 1-10 "0"-Bitzeiten Dauer wird dann von dem differenzierenden Hochpass ein negativer Spannungspuls erzeugt. Unterschreitet dieser einen gewissen zweiten Wert so wird das digitale Ausgangssignal eines (zweiten) analogelektrischen Komparators für diesen negativen Wert das Flip-Flop (oder der Mikrokontroller das entsprechende Bit) wieder zurücksetzen.

Dadurch entsteht am Ausgang des Flip-Flops (beziehungsweise im Zustand des entsprechen Mikrokontroller-bits) wieder ein Abbild des ursprünglichen NRZ-kodierten Datensignals, das dann wieder bewährten digitalelektronischen Auswerteschaltungen für die Byte-Rekonstruktion zugeführt werden kann.

Um nun zu verhindern, dass eine eventuelle optische oder elektrische Impulsstörung zu einer dauerhaften Störung eines Telegramms führt, wird kann man gleichzeitig mit dem Start eines Null-Bits ein retriggerbares Monoflop (oder eine Software-Zeit im Mikrokontroller) mit einer Rückfallzeit von > 10 Bitzeiten starten (oder retriggern), dessen Rückfall dann ebenfalls zum Rücksetzen des Daten-Flip-Flops verwendet wird.

In der analog-elektrischen Schaltungstechnik kann man alternativ auch nur ein retriggerbares Monoflop mit einem Rücksetzeingang verwenden oder eine entsprechende Funktion in Software realisieren. Alternativ zum Einsatz zweier getrennter Komparatoren mit jeweils einer unterschiedlichen Schwellenspannung kann man den zweiten Komparator sparen und nur einen Komparator mit einer umschaltbaren Schwelle verwenden. Bei rückgesetztem Monoflop bzw. Flip-Flop wird die obere (positive) Schwelle aktiviert, bei gesetztem Monoflop bzw. Flip-Flop die untere (negative) Schwelle. Da viele Komparatoren nur positive Spannungen verarbeiten können, kann man auch zu dem Ausgangssignal des Hochpasses eine feste (kleine) positive Spannung addieren, so dass die obere Detektionsschwelle darüber, die untere Detektionsschwelle zwar darunter aber immer noch im Bereich positiver Spannungen liegt.

Die Erfindung wird nachstehend anhand von Ausführungsbeispielen unter Bezugnahme auf die Zeichnung näher erläutert. In dieser zeigen:
- Figur 1:: eine schematische Darstellung eines Datenwortes, welches über eine optoelektronische Datenübertragungsstrecke von einem Sender zu einem Empfänger übertragen werden soll;
- Figur 2:: eine schematische Darstellung des vom Empfänger der Datenübertragungseinrichtung abgegebenen Lichtstromes;
- Figur 3:: eine schematische Darstellung des mit einem anwachsenden Störsignal überlagerten Lichtstromes, wie er vom Empfänger der Datenübertragungsstrecke erhalten wird;
- Figur 4:: das Schaltbild eines Empfängers für ZVEI-kodierte Signale, der aus dem erhaltenen verzerrten Signal nach Figur 3 ein von Störungen befreites Datensignal wieder gewinnt;
- Figur 5:: den Spannungsverlauf am Ausgang eines Hochpaßfilters der Schaltung nach Figur 4;
- Figur 6:: den zeitlichen Signalverlauf am Ausgang eines ersten Komparators der Schaltung nach Figur 4;
- Figur 7:: den Signalverlauf am Ausgang eines zweiten Komparators der Schaltung nach Figur 4;
- Figur 8:: den Signalverlauf am Ausgang eines Flipflops der Schaltung nach Figur 4;
- Figur 9:: eine ähnliche Schaltung wie Figur 4, bei welcher jedoch Mittel zum alternativen Erkennen von IRDA-kodierten Signalen vorgesehen sind;
- Figur 10:: eine weitere Empfängerschaltung, die anstelle der Empfängerschaltung nach Figur 4 verwendbar ist;
- Figur 11:: eine nochmals abgewandelte Empfängerschaltung, die anstelle derjenigen von Figur 4 verwendbar ist;
- Figur 12:: den Signalverlauf am Ausgang eines Hochpaßfilters der Empfängerschaltung nach Figur 11; und
- Figur 13:: eine nochmals abgewandelte Empfängerschaltung für eine optoelektronische Datenübertragungsstrecke, bei welcher der Empfänger auch als Sender verwendbar ist.

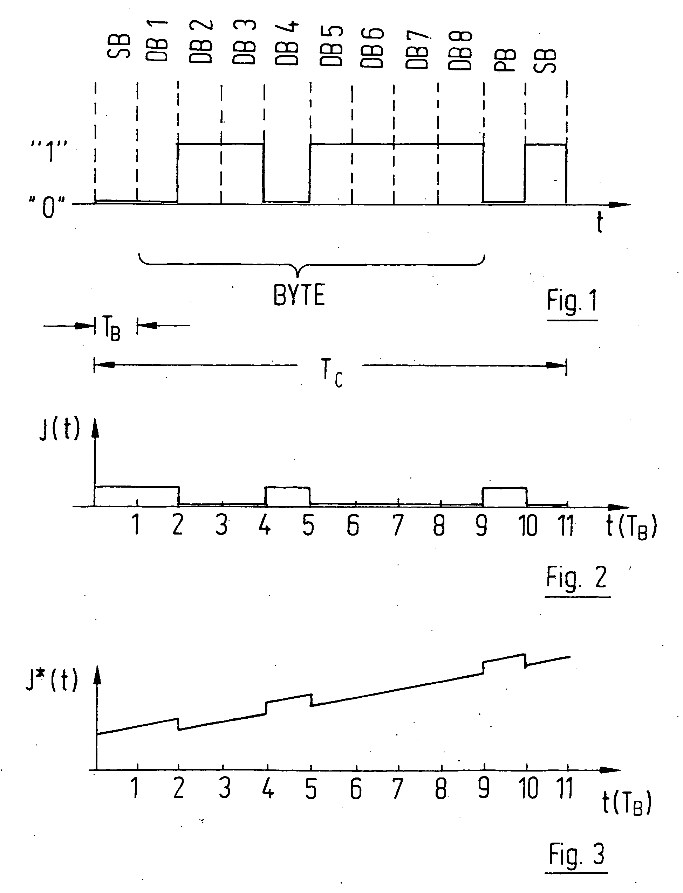

Figur 1 zeigt ein digitales Signal, welches von einem elektronischen Meßgerät über eine optoelektronische Datenübertragungsstrecke an ein Meßwert-Auslesegerät überstellt werden soll. Der Einfachheit halber soll ein Fall betrachtet werden, bei dem die eigentlichen Meßdaten 8 Bit umfassen. Es sei angenommen, dass die 8 gerade zu übertragenden Datenbits die binäre Zahl "10010000" darstellen sollen.

Wie üblich ist den Datenbits DB1 bis DB8 ein Startbit SB vorangestellt. Hinter den Datenbits DB1 bis DB8 folgt ein Paritybit PB sowie ein Stopbit SB.

Das in Figur 1 gezeigt Signal wird in einem Sender dazu verwendet, das von einer Leuchtdiode abgegebene Licht zu modulieren. Typischerweise erfolgt dies so, dass ein Datenbit mit dem Wert "1" die Lichtabgabe der am Leuchtdiode unterbindet, während ein Datenbit mit Wert "0" die Leuchtdiode zum Abgeben von Licht ansteuert.

Der von der Leuchtdiode des Senders abgegebene Lichtstrom hat somit in Abhängigkeit von der Zeit das in Figur 2 gezeigte Aussehen. Die verschiedenen Datenbits sind in komplementärer Darstellung gut erkennbar.

Auf dem Weg des Lichtes vom Sender zum Empfänger des optoelektronischen Modems kann der optische Datenstrom durch Überlagerung von Fremdlicht gestört werden. Es kann sich hierbei um Gleichlicht (Tageslicht) oder Wechsellicht (Licht, welches von mit Wechselstrom betriebenen Glühlampen, Fluoreszenzleuchten und dergleichen abgegeben wird) handeln.

Das Licht, welches beim Empfänger ankommt, kann somit die in Figur 3 gezeigte Form haben, wenn der Störlichtpegel ein anwachsender Pegel ist. Wird das Signal zu einem Zeitpunkt übertragen, bei welchem die Intensität von 100 Hz - moduliertem Störlicht gerade abnimmt, so sitzen die optischen Bits auf einem abfallendem Grundsignal.

In den herkömmlichen Empfängern von optoelektronischen Datenübertragungsstrecken werden die einlaufenden optischen Datenbits dadurch wieder in elektrische Signale umgewandelt, dass man das Ausgangssignal eines Lichtsensors, der mit dem optischen Datenstrom beaufschlagt ist, auf einen Diskriminator gibt, der feststellt, ob das Sensor-Ausgangssignal größer ist als eine vorgegebene Schwelle oder nicht.

Sitzen nun die einlaufenden optischen Signale auf einem hohen optischen Grundsignal, so erzeugt der an den Sensor angeschlossene Diskriminator ständig ein Signal "Licht ein", und zwar auch für diejenigen optischen Datenbits, die einem Signal "Licht aus" des zu übermittelnden Datenwortes entsprechen. Sitzt das optische Datensignal dagegen auf einem abnehmenden Störsignal oder wird das optische Datensignal durch Hindernisse abgeschwächt, so erhält man am Ausgang des Empfängers immer ein Signal "Licht aus", gleich ob die optischen Datenbits "1" oder "0" sind.

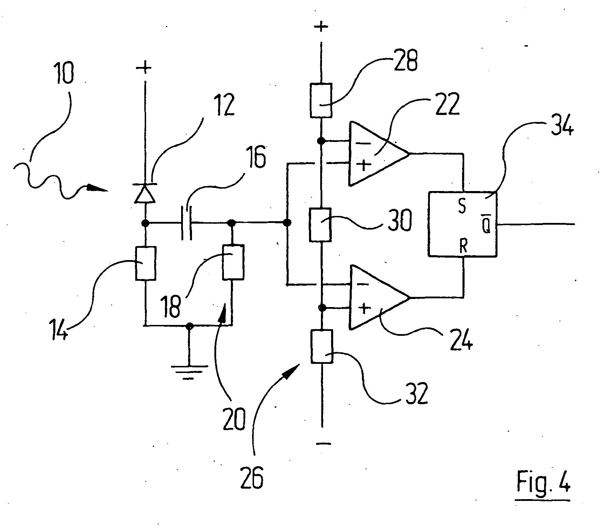

In Figur 4 ist nun ein Empfänger für ein optoelektronisches Modem dargestellt, der durch statische oder zeitlich langsam veränderliche optische Störsignale nicht in seinem Arbeiten beeinflußt wird. "Zeitlich" langsam bedeutet dabei langsam gegenüber den Pegeländerungen im zu übertragenden Signal.

Der optische Datenstrom ist durch einen Pfeil 10 veranschaulicht. Er fällt auf eine als Lichtdetektor betriebene Leuchtdiode 12, deren Kathode mit der positiven Versorgungsspannung verbunden ist und deren Anode über einen Widerstand 14 mit Masse verbunden ist.

Die Anode der Leuchtdiode 12 ist ferner über eine Reihenschaltung aus einem Kondensator 16 und einem Widerstand 18 mit Masse verbunden. Die Größe des Kondensators 16 und des Widerstandes 18 sind so gewählt, das diese beiden Komponenten zusammen einen Hochpaßfilter 20 bzw. einen Differenzierkreis bilden. Dabei stellt der Knoten zwischen dem Kondensator 16 und dem Widerstand 18 den Filterausgang dar.

Der Filterausgang ist mit der positiven Eingangsklemme eines ersten Komparators 22 sowie mit der negativen Eingangsklemme eines zweiten Komparators 24 verbunden.

Zwischen die positive und negative Versorgungsspannung ist ein Spannungsteiler 26 geschaltet, der drei in Reihe geschaltete Widerstände 28, 30, 32 aufweist.

Der zwischen den Widerständen 28 und 30 liegende Knoten der Widerstandskette ist mit der negativen Eingangsklemme des Komparators 22 verbunden. Der zwischen den Widerständen 30 und 32 liegende Knoten des Spannungsteilers 26 ist mit der positiven Eingangsklemme des Komparators 24 verbunden.

Damit erzeugt der erste Komparator 22 immer dann ein Ausgangssignal, wenn das Ausgangssignal des Hochpaßfilters 20 eine vorgegebene Schwelle nach oben überschreitet und der zweite Komparator 24 stellt immer dann ein Ausgangssignal bereit, wenn das Ausgangssignal des Hochpaßfilters 20 einen negativen Schwellwert nach unten unterschreitet.

Mit dem Ausgangssignal des ersten Komparators 22 ist der Setzeingang eines Flipflops 34 beaufschlagt. Dessen Rückstelleingang erhält das Ausgangssignal des zweiten Komparators 24 .

Der invertierte Ausgang des Flipflops 34 stellt das von langsam veränderlichen Störkomponenten befreite Ausgangssignal bereit.

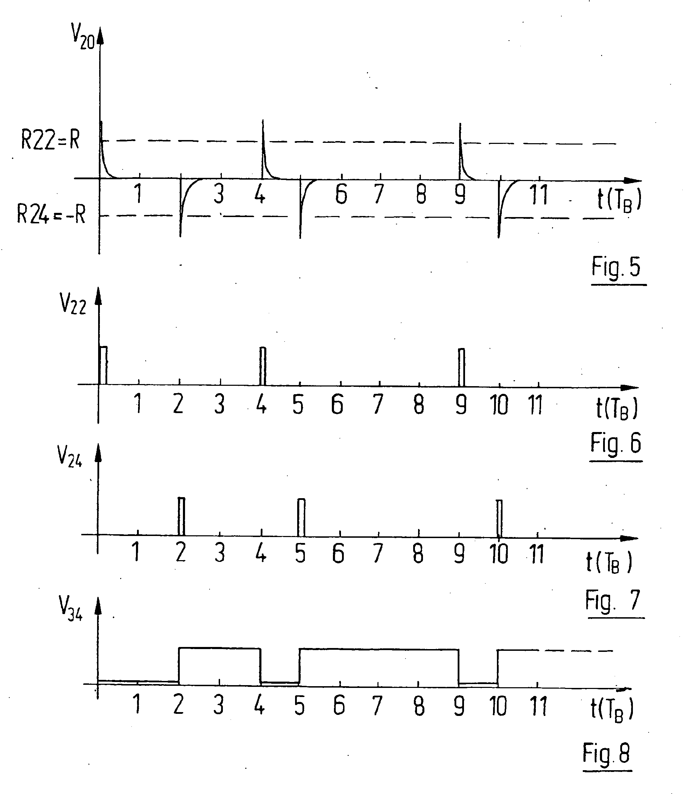

Fällt der störsignalbehaftete optische Datenstrom nach Figur 3 auf die Leuchtdiode 12 , so erhält man an dem Knoten zwischen der Leuchtdiode 12 und dem Widerstand 14 wieder ein entsprechendes elektrisches Signal. Am Ausgang des Hochpaßfilters 20 erhält man das in Figur 5 gezeigte Signal: die ansteigenden Flanken des Eingangssignals werden in positive Impulse und die abfallenden Signalflanken in negative Impulse umgesetzt.

In Figur 5 sind ferner die Schaltschwellen der beiden Komparatoren 22 und 24 eingezeichnet.

Bei dem in Figur 5 gezeigten Signalverlauf erhält man dann am Ausgang des Komparators 22 das in Figur 6 gezeigte Signal und am Ausgang des Komparators 24 das in Figur 7 gezeigte Signal.

Verwendet man die Signale nach den Figuren 6 und 7 zum Ansteuern des Flipflops 34 , so erhält man das in Figur 8 dargestellte Signal. Dies entspricht dem in Figur 1 gezeigten zu übertragenden Signal und enthält keinerlei überlagerte Störsignale.

Die Unterdrückung der Störsignale wird offensichtlich mit einfachen schaltungstechnischen Mitteln erzielt.

Bei dem oben betrachteten Ausführungsbeispiel erfolgte das Übersenden der Daten nach dem "ZVEI"-Übertragungsprotokoll: jedes elektrische Bit wurde in ein optisches Bit gleicher zeitlicher Länge umgesetzt. Wie ebenfalls schon oben dargelegt, ist gegenüber dem "ZVEI"-Protokoll das "IRDA"-Protokoll im Hinblick auf den Energieverbrauch vorteilhafter, da die Datenübertragung in Form von Lichtimpulsen erfolgt, deren Dauer klein ist gegenüber der Bitzeit.

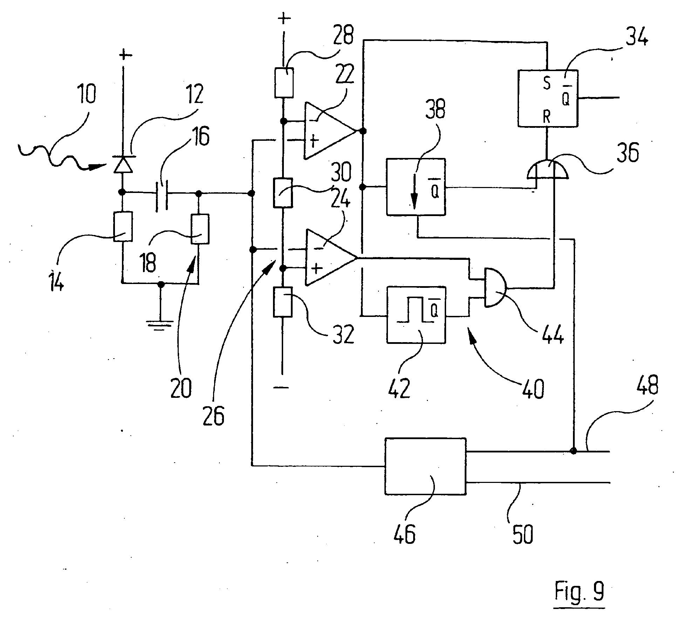

Um einen Empfänger, wie er obenstehend unter Bezugnahme auf Figur 4 erläutert wurde, auch zur Verarbeitung von "IRDA"-kodierten optischen Datenströmen verwenden zu können, kann man ihn gemäß Figur 9 modifizieren.

Der Rückstelleingang des Flipflops 34 ist mit dem Ausgang eines ODER-Gliedes 36 verbunden, dessen einer Eingang mit dem invertierenden Ausgang eines Monoflops 38 verbunden ist. Letzteres wird durch das Ausgangssignal des ersten Komparators 22 angestoßen und fällt nach Ablauf seiner Periode wieder in den Grundzustand zurück.

Der andere Eingang des ODER-Gliedes 36 ist über einen Totschaltkreis 40 mit dem Ausgang des Komparators 24 verbunden. Dieser umfaßt ein Monoflop 42, welches durch das Ausgangssignal der Komparators 22 angestossen wird und eine Zeitkonstante hat, die etwas größer ist als die Dauer von Lichtimpulsen beim IRDA-Protokoll. Das Ausgangssignal der Monoflops 42 und das Ausgangssignal des Komparators 24 werden durch ein UND-Glied 44 zusammengeschaltet, dessen Ausgangssignal über das ODER-Glied 36 zum Rücksetzen des Flip-Flops 34 dient. Durch den Totschaltkreis 40 ist somit gewährleistet, dass nur die abfallenden Flanken von ZVEI-Signalen nicht aber die von IRDA-Signalen das Flip-Flop 34 zurücksetzen.

Setzt man die Zeitkonstante des Monoflops 38 gleich der Bitzeit oder geringfügig kleiner, so wird das Flipflop 34 jeweils nach einer Bitzeit zwangsweise zurückgesetzt. Ein nächster kleiner Lichtblitz im optischen Datenstrom kann dann das Flipflop 34 für die nächste Bitzeit neu setzen.

Damit das Zurücksetzen des Flip-Flops 34 durch das Monoflop 38 nicht auch bei ZVEI-Signalen erfolgt, wird dessen Energieversorgung nur bei Erhalt von IRDA-Signalen eingeschaltet.

Hierzu wird das Ausgangssignal des Hochpassefilters 20 daraufhin untersucht, in welchen zeitlichem Abstand dort positive und negative Impulse erhalten werden. Hierzu ist der Knoten zwischen dem Kondensator 16 und dem Widerstand 18 mit dem Eingang eines Kodierungs-Erkennungskreises 46 verbunden.

Erfolgt die optische Datenübertragung nach dem IRDA-Protokoll, so hat man Lichtimpulse, deren Dauer kurz gegenüber der Bitzeit ist. Entsprechend erhält man am Ausgang des Hochpaßfilters 20 einen positiven Impuls für die ansteigende Flanke eines Lichtblitzes und kurz danach einen negativen Impuls für die abfallende Flanke.

Der Kodierungs-Erkennungskreis 46 erkennt somit aus dem Eintreffen von zwei entgegengesetzten Impulsen unter einem zeitlichen Abstand von weniger als der Bitzeit das "IRDA"-Protkoll. Diese Anforderung kann ggf. dadurch verschärft werden, dass man ein Eintreffen innerhalb einer Zeitspanne von weniger als einem Drittel der Bitzeit fordert. Der Kodierungs-Erkennungskreis 46 zeigt dann auf einer Ausgangsleitung 48 ein erstes Ausgangssignal, welches für eine Datenübertragung nach dem "IRDA"-Protokoll charakteristisch ist. Das Fehlen eines solchen Signales zeigt eine Datenübermittlung nach dem ZVEI-Protokoll an.

Das Protokoll-Identifizierungssignal auf der Ausgangsleitung 48 kann von einer nachgeschalteten Auswerteschaltung dazu verwendet werden, die eigentlichen Daten im übertragenen Datenstrom in vorgegebener Weise zu entpacken oder sonstwie zu verarbeiten, um sie für eine weitere Verarbeitung vorzubereiten.

Das Signal auf der Leitung 48 wird auch zum Aktivieren des Monoflops 38 verwendet.

Der Kodierungs-Erkennungskreis 46 , der mit den am Ausgang des Hochpaßfilters 20 erhaltenen Impulsen beaufschlagt ist, kann aus dem Abstand solcher aufeinanderfolgender Impulse, die in die gleiche Richtung gehen, auch die Baudrate der Datenübertragung ableiten. Er kann so ein entsprechendes Baudratensignal auf einer Ausgangsleitung 50 bereitstellen, welches ebenfalls bei der weiteren Datenaufbereitung verwendet werden kann.

Wie oben dargelegt kann man Kombinations-Empfänger für ZVEI und IRDA mit geringem Mehraufwand realisieren. Dies ist deshalb von Interesse, da zunehmene Endgeräte gewünscht werden, die sowohl mit dem (älteren) ZVEI)-basierten NRZ-Bitkodierung als auch mit der impulsbasierten IRDA-artigen Bitkodierung kommunizieren können.

Für die IRDA-artige Dekodierung kann erfindungsgemäß ebenfalls ein Hochpass eingesetzt werden, der optische oder elektrische konstante oder zeitlich langsam veränderliche Störsignale eliminiert aber die kuren Bitpulse mit einer Dauer von weniger als der Zeitkonstanten des Hochpasses weitgehend unverändert passieren lässt. Hier wird dann das die Schwellenumschaltung steuernde Monoflop auf genau eine Bitzeit gesetzt und die negativen Pulse fallen weg, bzw. werden von der Auswerteschaltung ignoriert.

So können mit der im Wesentlichen identischen Schaltung sowohl IRDA(Impuls)-kodierte-Signale als auch ZVEI (Pegel)-kodierte Signale nachgewiesen werden. Da die Telegramme meist mit einem protokollspezifischen (Aufwach-)Bitmuster starten, das für beide Normen in der Baudrate und/oder in der Bitfolge unterschiedlich ist, kann man oft schon alleine durch die Erkennung der Zeitabstände zwischen positiven Flanken (IRDA-Modus) erkennen welches Bitprotokoll verwendet werden soll.

Bei der üblichen Aufweckbaudrate nach ZVEI von 300 Baud oder 2400 Baud und einem (genormten) Aufweckbyte von 55hex ist die Zeit zwischen zwei aufeinander folgenden Bitbeginnen stets 2 oder 3 Bitzeiten (entsprechend 833 µsek bzw. 1250 µsek bei 2400 Baud oder 6667µs bzw. 10000 µs bei 300 Baud). Bei der genormten Aufweckbaudrate von IRDA von 9600 Byte und einem Aufweckbytes von 55hex ist der zeitliche Abstand dagegen entweder 1 oder 5 Bitzeiten (entsprechend etwa 104 oder 520 µsek). Anhand des Zeitabstandes des ersten positiven Flankenpaares des Aufweckheaders kann man also bereits sicher die verwendete Bitkodierung und die Baudrate bei ZVEI erkennen.

Auf die oben beschriebene Weise werden etwa erhaltene IRDA-Signale richtig erfaßt und gleichzeitig in ZVEI-Signale umgesetzt.

Auch bei den nachfolgend beschriebenem weiter abgewandelten Empfängern sind Schaltungsteile, die weiter oben schon beschriebenen Schaltungsteilen von der Funktion her entsprechen, wieder mit den selben Bezugszahlen versehen. Diese Schaltungsteile brauchen nicht noch einmal detailliert beschrieben zu werden.

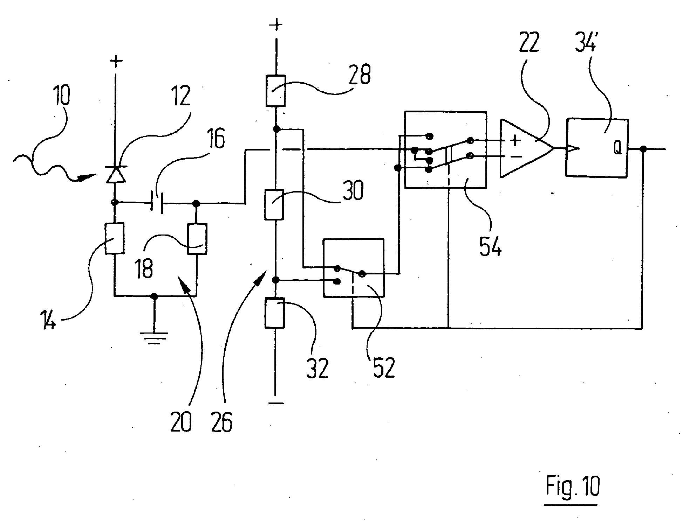

Bei dem Empfänger nach Figur 10 ist nur ein einziger Komparator 22 vorgesehen. Diese ist ausgangsseitig mit einem Toggle-Flipflop 34' verbunden, dessen Ausgang das Ausgangsdatensignal bereitstellt und zugleich zur Ansteuerung eines einpoligen Umschalters 52 und eines zweipoligen Umschalters 54 dient, über welche die Größe der Referenzspannung wählbar bzw. die Eingangssignale des Komparators 22 vertauschbar sind.

Auf diese Weise lassen sich zwei unterschiedliche Schaltschwellen für den Komparator 22 vorgeben, und dies führt wegen des Toggle-Flipflops 34' dazu, dass nach Erhalt einer ansteigenden Signalflanke nur noch abfallende Signalflanken zu einem Ausgangssignal des Komparators 22 führen können, während nach Erhalt einer abfallenden Signalflanke nur noch ansteigende Signalflanken ein Ausgangssignal des Komparators 22 erzeugen können.

Die Schaltung nach Figur 10 arbeitet somit im Ergebnis gleich wie die Schaltung nach Figur 4.

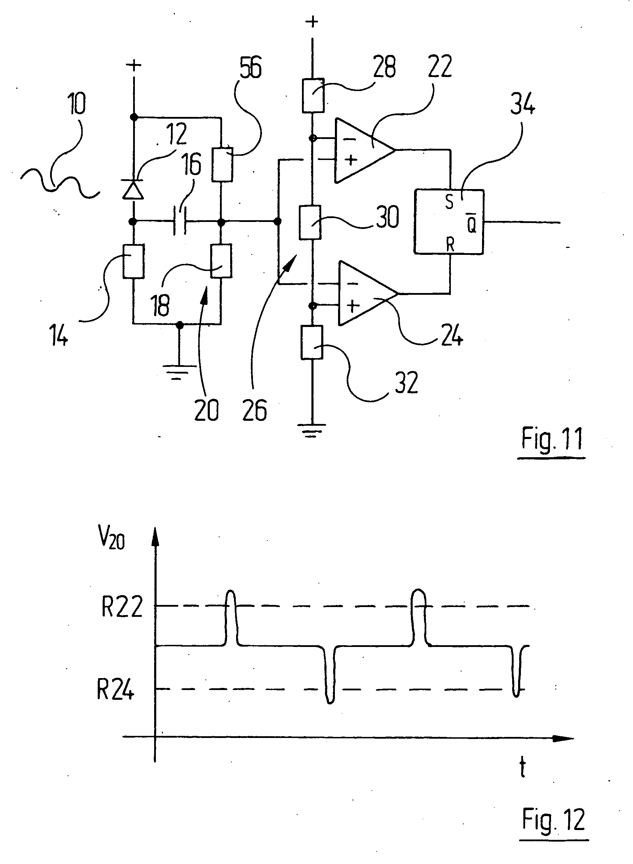

Die Schaltung nach Figur 11 ist derjenigen nach Figur 4 sehr ähnlich, nur wird dem Ausgangssignal des Hochpaßfilters 20 noch eine Gleichspannung überlagert. Hierzu ist der Knoten zwischen dem Kondensator 16 und dem Widerstand 18 über einen weiteren Widerstand 56 mit der positiven Versorgungsspannung verbunden.

Die Größe des Widerstandes 56 ist so gewählt, dass das Ausgangssignal V20 des Hochpaßfilters 20 auch bei Detektierung abfallender Signalflanken positiv bleibt, wie in Figur 12 dargestellt. Dort sind die Schaltschwellen R22 und R24 der Komparatoren 22 und 24 wieder gestrichelt angedeutet. Diese sind durch Schaltung des Spannungsteilers 26 zwischen positive Versorgungsspannung und Masse beide auf positive Werte eingestellt.

Man erkennt, dass die Signalformung durch die Schaltung nach Figur 11 genauso erfolgt wie durch die Schaltung nach Figur 4.

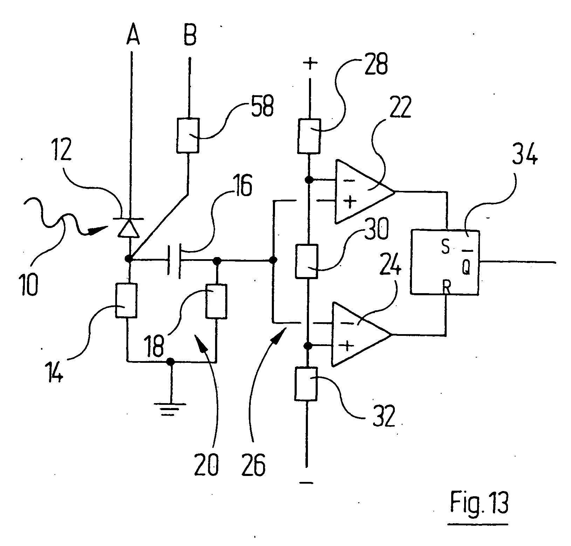

Figur 13 zeigt ein abgewandeltes Empfängerteil, bei dem die bei den bisherigen Ausführungsbeispielen nur als Lichtsensor verwendete Leuchtdiode 12 auch als Lichtquelle verwendet werden kann.

Der Knoten zwischen der Leuchtdiode 12 und dem Widerstand 14 ist über einen weiteren, niederohmigen Widerstand 48 mit einer Steuerklemme B verbunden. Die positive Versorgungsspannung für die Leuchtdiode 12 wird an einer Steuerklemme A bereitgestellt.

Ist die Steuerklemme B hochohmig abgeschlossen (tristate), so arbeitet die Schaltung nach Figur 13 genauso wie die in Figur 4 gezeigte nämlich als Empfänger einer optoelektronischen Datenübertragungsstrecke.

Sind die Steuerklemmen A und B beide spannungsfrei, so befindet sich der Empfänger in einem Leerlauf-Zustand.

Ist die Steuerklemme A mit dem Signal "0" und die Steuerklemme B mit dem Signal "1" beaufschlagt, so sendet die Leuchtdiode 12 ein Bit "0".

Sind die Steuerklemmen A und B beide mit dem logischen Signal "1" beaufschlagt, so erzeugt die Leuchtdiode 12 ein optisches Bitsignal "1".

Die in Figur 13 gezeigte Variante eignet sich somit zum Einsatz in bidirektionalen optoelektronischen Datenübertragungsstrecken.

Es versteht sich, dass man die Modifikation nach Figur 13 auch an den Schaltungen nach den Figuren 9, 10 und 11 vornehmen kann.

Zur weiteren Kostensenkung kann man also den optoelektrischen Empfänger durch eine in Rückwärtsrichtung betriebene (IR)-LED realisieren, die in Vorwärtsrichtung dann als optoelektronischer Sender dient, so daß man statt zweier optoelektronischer Bauelemente nur eines einsetzen braucht.

## Patentansprüche

1. Verfahren zur empfängerseitigen Eliminierung von statischen oder zeitlich langsam veränderlichen optischen oder elektrischen Störsignalen aus Eingangsdatensignalen bei der digitalen Datenübertragung in vorgegebenem Bitraster, wobei die Eingangsdatensignale mit einem Hochpaßfilter gefiltert werden, welches eine Zeitkonstante aufweist, die kleiner ist als die Bitzeit, und wobei in den so gefilterten Eingangsdatensignalen Signalanstiege und Signalabfälle detektiert werden und ein Ausgangsdatensignal auf einen ersten vorgegebenen Signalpegel gesetzt wird, wenn ein Signalanstieg festgestellt wird, und auf einen zweiten vorgegebenen Signalpegel gesetzt wird, wenn ein Signalabfall festgestellt wird, **dadurch gekennzeichnet, daß** das Ausgangsdatensignal auf den vorgegebenen zweiten Pegel gesetzt wird, wenn eine vorgegebene Grenzzahl von Bitzeiten nach Entdecken eines Signalanstieges verstrichen ist.

2. Verfahren nach Anspruch 1, **dadurch gekennzeichnet, daß** nur solche Signalanstiege und Signalabfälle berücksichtigt werden, die eine vorgegebene Größe oder eine vorgegebene Änderungsgeschwindigkeit übersteigen.

3. Verfahren nach Anspruch 1 oder 2, **dadurch gekennzeichnet, daß** die gefilterten Eingangsdatensignale nach der Zeit abgleitet werden und eine ansteigende signalflanke dadurch erkannt wird, daß das differenzierte Eingangsdatensignal eine vorgegebene positive Schwelle überschreitet.

4. Verfahren nach einem der Anspruch 1 bis 3, **dadurch gekennzeichnet, daß** das gefilterte Eingangsdatensignal nach der Zeit abgeleitet wird und eine abfallende Signalflanke dadurch erkannt wird, daß das differenzierte Eingangsdatensignal eine vorgegebene negative Schwelle unterschreitet.

5. Verfahren nach einem der Ansprüch 1 bis 4, **dadurch gekennzeichnet, daß** die vorgegebene Grenzzahl sich aus der Gesamtzahl der Bits eines Bytes minus der Anwahl der protokollgemäß stets nichtleuchtenden Bits eines Bytes ergibt, insbesondere 9 ist.

6. Verfahren nach einem der Anspruch 1 bis 5, **dadurch gekennzeichnet, daß** nach Entdecken eines Signalanstieges oder eines Signalabfalls weitere Signaländerungen in der gleichen Richtung solange verworfen werden, bis eine Signaländerung in der anderen Richtung detektiert wird.

7. Verfahren nach einem der Anspruch 1 bis 6, **dadurch gekennzeichnet, daß** beim Detektieren einer Signaländerung einer ersten Art ein Software-Speicherelement gesetzt wird und beim Detektieren einer Signaländerung einer zweiten Art das Software-Speicherelement gelöscht wird.

8. Verfahren nach einem der Anspruch 1 bis 7, **dadurch gekennzeichnet, daß** den gefilterten Eingangsdatensignalen eine Gleichspannung überlagert wird, deren Größe so gewählt ist, daß das mit ihr überlagerte gefilterte Eingangsdatensignal stets das gleiche Vorzeichen hat.

9. Verfahren nach einem der Anspruch 1 bis 8, **dadurch gekennzeichnet, daß** nach Detektieren einer Signaländerung das weitere Erkennen von Signaländerungen für eine vorgegebene Totzeit ausgesetzt wird, die kleiner ist als die Bitzeit.

10. Vorrichtung zur empfängerseitigen Eliminierung von statischen oder zeitlich langsam veränderlichen optischen oder elektrischen Störsignalen in Eingangsdatensignalen bei der digitalen Datenübertragung im vorgegebenem Bitraster, mit einer Signalformschaltung (20 bis 34), die eingangsseitig mit dem Eingangsdatensignal beaufschlagt ist und ausgangsseitig das Ausgangsdatensignal bereitstellt, wobei die Signalformschaltung (20 bis 34) aufweist: ein Hochpaßfilter (20), welches mit den Eingangsdatensignalen beaufschlagt ist und eine Zeitkonstante hat, die kleiner ist als die Bitzeit der digitalen Datenübertragung, eine mit dem Ausgangssignal des Hochpaßfilters (20) beaufschlagte Diskriminatorschalturzg (22, 24), die ein erstes Diskriminatorausgangssignal bereitstellt, wenn das gefilterte Eingangsdatensignal eine erste Schwelle überschreitet, und ein zweites Diskriminatorausgangssignal erzeugt, wenn das gefilterte Eingangsdatensignal eine zweite Schwelle unterschreitet, und eine steuerbare Gleichspannungsquelle (34), deren Ausgangssignal durch das erste Diskriminatorausgangssignal auf einen ersten Signalpegel gestellt wird und deren Ausgangssignal durch das zweite Diskriminatorausgangssignal auf einen zweiten vom ersten verschiedenen Signalpegel gestellt wird, **dadurch gekennzeichnet, daß** das den Ausgang des Hochpaßfilters (20) ein Kodierungs-Erkennungskreis (46) angeschlossen ist, der aus mindestens einem der nachstehend aufgeführten Kriterien ZVEI-kodierte Eingangsdatensignale von IRDA-kodierten Eingangsdatensignalen unterscheidet: zeitlicher Abstand zwischen Signalanstieg und Signalabfall der Eingangsdatensignale und zeitlicher Abstand zwischen zwei aufeinanderfolgenden Signalanstiegen oder Signalabfällen, und daß ein Totschaltkreis (40) vorgesehen ist, der das Ausgangsdatensignal auf den vorgegebenen zweiten Pegel setzt, wenn eine vorgegebene Grenzzahl von Bitzeiten nach Entdecken eines Signalanstieges verstrichen ist.

11. Vorrichtung nach Anspruch 10 **dadurch gekennzeichnet, daß** die Diskriminatorschaltung (22, 24) einen ersten analogelektrischen Komparator (22) aufweist, der bei der ersten Schaltschwelle (R22) arbeitet, und einen zweiten analogelektrischen Komparator (24) aufweist, der bei der zweiten Schaltschwelle (R24) arbeitet.

12. Vorrichtung nach Anspruch 10 oder 11, **dadurch gekennzeichnet, daß** die erste Schaltschwelle (R22) eine positive Schwelle (R) und die zweite Schaltschwelle (R24) eine negative Schwelle (-R)ist.

13. Vorrichtung nach Anspruch 12, **dadurch gekennzeichnet, daß** die Diskriminatorschaltung einen Komparator (22) umfaßt, dessen Referenzeingang mit einer steuerbaren Referenzspannungsquelle (26, 52) verbunden ist, deren Steuerklemme mit dem Ausgang der steuerbaren Spanungsquelle (34') verbunden ist.

14. Vorrichtung nach einem der Ansprüche 10 bis 13, **dadurch gekennzeichnet, daß** der Ausgang des Hochpaßfilters (20) mit dem einen Eingang eines Summierkreises (Knoten zwischen den Komponenten 16, 18, 56) verbunden ist, dessen zweiter Eingang mit einer Konstantsignalquelle (56) verbunden ist, deren Ausgangssignal so groß ist, daß das Ausgangssignal des Summierkreises stets das gleiche Vorzeichen hat.

15. Vorrichtung nach einem der Ansprüche 10 bis 14, **dadurch gekennzeichnet, daß** die Diskriminatorschaltung (22, 24) einen Totschaltkreis (40) umfaßt, der die Detektierung von Signaländerungen der einen Art nach Detektierung einer Signaländerung der anderen Art für eine Zeitspanne unterbindet, die kleiner ist als die Bitzeit.

16. Vorrichtung nach einem der Ansprüche 10 bis 15, **gekennzeichnet durch** einen an den Ausgang des Hochpaßfilters (20) angeschlossenen Kodierungs-Erkennungskreis (46), der aus den zeitlichen Abstand aufeinanderfolgender Signaländerungen gleicher Art die Bautraute und/ oder die Bitcodierung des verwendeten Datenübertragungsprotokolls ableitet.

17. Vorrichtung nach einem der Ansprüche 10 bis 16, **dadurch gekennzeichnet, daß** ein optoelektrischer sensor eines Empfängermodems eine Leuchtdiode (12) umfaßt.

18. Vorrichtung nach Anspruch 17, **dadurch gekennzeichnet, daß** die Leuchtdiode (12) in Sendephasen des optoelektrischen Modems als Sender arbeitet.

19. Vorrichtung nach einem der Ansprüche 10 bis 18, **dadurch gekennzeichnet, daß** sie mit einem Modemteil eines Verbrauchszählers für Wärme, Wasser, Strom und Heizkosten zusammenarbeitet.

## Claims

1. Method for the receiver-end elimination of static optical or electrical interference signals or optical or electrical interference signals that vary slowly with time from input data signals in digital data transmission in a predetermined bit raster, wherein the input data signals are filtered with a high-pass filter, which has a time constant that is smaller than the bit time, and wherein signal rises and signal decays are detected in the input data signals thus filtered and an output data signal is set to a first predetermined signal level if a signal rise is detected, and is set to a second predetermined signal level if a signal decay is detected, **characterised in that** the output data signal is set to the predetermined second level if a predetermined limit number of bit times has elapsed following detection of a signal rise.

2. Method according to claim 1, **characterised in that** only signal rises and signal decays that exceed a predetermined magnitude or a predetermined rate of change are taken into account.

3. Method according to claim 1 or 2, **characterised in that** the filtered input data signals are deduced according to time and a rising signal edge is recognised in that the differentiated input data signal exceeds a predetermined positive threshold.

4. Method according to one of claims 1 to 3, **characterised in that** the filtered input data signal is deduced according to time and a decaying signal edge is recognised **in that** the differentiated input data signal falls below a predetermined negative threshold.

5. Method according to one of claims 1 to 4, **characterised in that** the predetermined limit number results from the total number of bits of a byte minus the number of bits of a byte that are always non-illuminating according to the protocol, is in particular 9.

6. Method according to one of claims 1 to 5, **characterised in that** following detection of a signal rise or a signal decay, further signal changes in the same direction are discarded until a signal change in the other direction is detected.

7. Method according to one of claims 1 to 6, **characterised in that** on detection of a signal change of a first type, a software memory element is set and on detection of a signal change of a second type, the software memory element is cancelled.

8. Method according to one of claims 1 to 7, **characterised in that** a direct voltage is superposed on the filtered input data signals, the magnitude of which voltage is selected so that the filtered input data signal superposed with it always has the same sign.

9. Method according to one of claims 1 to 8, **characterised in that** following detection of a signal change, the further detection of signal changes is discontinued for a predetermined dead time, which is smaller than the bit time.

10. Device for the receiver-end elimination of static optical or electrical interference signals or optical or electrical interference signals that vary slowly with time in input data signals in digital data transmission in a predetermined bit raster, with a signal shaping circuit (20 to 34), which is acted upon on the input side by the input data signal and supplies the output data signal on the output side, wherein the signal shaping circuit (20 to 34) has: a high-pass filter (20), which is acted upon by the input data signals and has a time constant that is smaller than the bit time of the digital data transmission, a discriminator circuit (22, 24) acted upon by the output signal of the high-pass filter (20), which circuit supplies a first discriminator output signal if the filtered input data signal exceeds a first threshold, and generates a second discriminator output signal if the filtered input data signal falls below a second threshold, and a controllable direct voltage source (34), the output signal of which is set by the first discriminator output signal to a first signal level and the output signal of which is set by the second discriminator output signal to a second signal level different from the first, **characterised in that** connected to the output of the high-pass filter (20) is a coding detection circuit (46), which distinguishes ZVEI-coded input data signals from IRDA-coded input data signals from at least one of the criteria listed below: time interval between signal rise and signal decay of the input data signals and time interval between two consecutive signal rises or signal decays, and that a dead circuit (40) is provided, which sets the output data signal to the predetermined second level if a predetermined limit number of bit times has elapsed following detection of a signal rise.

11. Device according to claim 10, **characterised in that** the discriminator circuit (22, 24) has a first analog electrical comparator (22), which operates at the first switching threshold (R22), and a second analog electrical comparator (24), which operates at the second switching threshold (R24).

12. Device according to claim 10 or 11, **characterised in that** the first switching threshold (R22) is a positive threshold (R) and the second switching threshold (R24) is a negative threshold (-R).

13. Device according to claim 12, **characterised in that** the discriminator circuit comprises a comparator (22), the reference input of which is connected to a controllable reference voltage source (26, 52), the control terminal of which is connected to the output of the controllable voltage source (34').

14. Device according to one of claims 10 to 13, **characterised in that** the output of the high-pass filter (20) is connected to one input of a summation circuit (node between the components 16, 18, 56), the second input of which is connected to a constant signal source (56), the output signal of which is so great that the output signal of the summation circuit always has the same sign.

15. Device according to one of claims 10 to 14, **characterised in that** the discriminator circuit (22, 24) comprises a dead circuit (40), which suppresses the detection of signal changes of one type following detection of a signal change of the other type for a period of time that is smaller than the bit time.

16. Device according to one of claims 10 to 15, **characterised by** a coding detection circuit (46) connected at the output of the high-pass filter (20), which circuit deduces from the time spacing of consecutive signal changes of the same type the baud rate and/or the bit coding of the data transmission protocol used.

17. Device according to one of claims 10 to 16, **characterised in that** an optoelectrical sensor of a receiver modem comprises a light-emitting diode (12).

18. Device according to claim 17, **characterised in that** the light-emitting diode (12) operates as a transmitter in transmitting phases of the optoelectrical modem.

19. Device according to one of claims 10 to 18, **characterised in that** it collaborates with a modem part of a meter for heat, water, electricity and heating costs.

## Revendications

1. Procédé pour l'élimination côté récepteur des signaux parasites optiques ou électriques statiques ou lentement variables dans le temps de signaux de données d'entrée dans la transmission numérique de données en trames de bits prédéfinies, dans lequel les signaux de données d'entrée sont filtrés avec un filtre passe-haut, lequel possède une constante de temps qui est plus petite que le temps de bit, et dans lequel des montées de signal et des baisses de signal sont détectées dans les signaux de données d'entrée ainsi filtrés et un signal de données de sortie est mis à un premier niveau de signal prédéfini quand une montée de signal est constatée et à un deuxième niveau de signal prédéfini quand une baisse de signal est constatée, **caractérisé en ce que** le signal de données de sortie est mis au deuxième niveau prédéfini quand un nombre limite prédéfini de temps de bit s'est écoulé après détection d'une montée de signal.

2. Procédé selon la revendication 1, **caractérisé en ce que** seules sont prises en considération les montées de signal et baisses de signal qui dépassent une grandeur prédéfinie ou une vitesse de variation prédéfinie.

3. Procédé selon la revendication 1 ou 2, **caractérisé en ce que** les signaux de données d'entrée filtrés sont dérivés en fonction du temps et un flanc de signal montant est détecté par le fait que le signal de données d'entrée dérivé dépasse un seuil positif prédéfini.

4. Procédé selon une des revendications 1 à 3, **caractérisé en ce que** le signal de données d'entrée filtré est dérivé en fonction du temps et un flanc de signal descendant est détecté par le fait que le signal de données d'entrée dérivé est inférieur à un seuil négatif prédéfini.

5. Procédé selon une des revendications 1 à 4, **caractérisé en ce que** le nombre limite prédéfini est obtenu à partir du nombre total de bits d'un byte moins le nombre de bits toujours éteints d'un byte selon le protocole, en particulier est égal à 9.

6. Procédé selon une des revendications 1 à 5, **caractérisé en ce qu'**après détection d'une montée de signal ou d'une baisse de signal, d'autres variations de signal dans le même sens sont rejetées jusqu'à ce qu'une variation de signal dans l'autre sens soit détectée.

7. Procédé selon une des revendications 1 à 6, **caractérisé en ce que** lors de la détection d'une variation de signal d'un premier type, un élément de mémoire logiciel est mis à un et lors de la détection d'une variation de signal d'un deuxième type, l'élément de mémoire logiciel est effacé.

8. Procédé selon une des revendications 1 à 7, **caractérisé en ce qu'**une tension continue est superposée aux signaux de données d'entrée filtrés, dont la grandeur est choisie de façon que le signal de données d'entrée filtré auquel elle est superposée ait toujours le même signe.

9. Procédé selon une des revendications 1 à 8, **caractérisé en ce qu'**après détection d'une variation de signal, la poursuite de la détection de variations de signal est suspendue pendant un temps mort prédéfini qui est plus petit que le temps de bit.

10. Dispositif pour l'élimination côté récepteur des signaux parasites optiques ou électriques statiques ou lentement variables dans le temps dans des signaux de données d'entrée dans la transmission numérique de données en trames de bits prédéfinies, avec un circuit conformateur de signaux (20 à 34) qui reçoit le signal de données d'entrée côté entrée et met à disposition le signal de données de sortie côté sortie, dans lequel le circuit conformateur de signaux (20 à 34) présente : un filtre passe-haut (20), lequel reçoit les signaux de données d'entrée et a une constante de temps qui est plus petite que le temps de bit de la transmission numérique de données, un circuit discriminateur (22, 24) qui reçoit le signal de sortie du filtre passe-haut (20) et met à disposition un premier signal de sortie de discriminateur quand le signal de données d'entrée filtré dépasse un premier seuil, et génère un deuxième signal de sortie de discriminateur quand le signal de données d'entrée filtré est inférieur à un deuxième seuil, et une source de tension continue commandable (34) dont le signal de sortie est mis à un premier niveau de signal par le premier signal de sortie de discriminateur et dont le signal de sortie est mis à un deuxième niveau de signal, différent du premier, par le deuxième signal de sortie de discriminateur, **caractérisé en ce qu'**un circuit de détection de codage (46) est connecté à la sortie du filtre passe-haut (20), qui, à partir d'au moins un des critères ci-après, distingue des signaux de données d'entrée codés ZVEI de signaux de données d'entrée codés IRDA : distance temporelle entre montée de signal et baisse de signal des signaux de données d'entrée et distance temporelle entre deux montées de signal ou baisses de signal successives, et qu'il est prévu un circuit de temps mort (40) qui met le signal de données de sortie au deuxième niveau prédéfini quand un nombre limite prédéfini de temps de bit s'est écoulé après détection d'une montée de signal.

11. Dispositif selon la revendication 10, **caractérisé en ce que** le circuit discriminateur (22, 24) présente un premier comparateur électrique analogique (22) qui fonctionne au premier seuil de commutation (R22) et un deuxième comparateur électrique analogique (24) qui fonctionne au deuxième seuil de commutation (R24).

12. Dispositif selon la revendication 10 ou 11, **caractérisé en ce que** le premier seuil de commutation (R22) est un seuil positif (R) et le deuxième seuil de commutation (R24) un seuil négatif (-R).

13. Dispositif selon la revendication 12, **caractérisé en ce que** le circuit discriminateur comprend un comparateur (22) dont l'entrée de référence est reliée à une source de tension de référence commandable (26, 52) dont la borne de commande est reliée à la sortie de la source de tension commandable (34').

14. Dispositif selon une des revendications 10 à 13, **caractérisé en ce que** la sortie du filtre passe-haut (20) est reliée à une entrée d'un circuit d'addition (noeud entre les composants 16, 18, 56) dont la deuxième entrée est reliée à une source de signal constant (56) dont le signal de sortie est assez grand pour que le signal de sortie du circuit d'addition ait toujours le même signe.

15. Dispositif selon une des revendications 10 à 14, **caractérisé en ce que** le circuit discriminateur (22, 24) comprend un circuit de temps mort (40) qui interdit la détection de variations de signal d'un type après détection d'une variation de signal de l'autre type pendant un intervalle de temps qui est plus petit que le temps de bit.

16. Dispositif selon une des revendications 10 à 15, **caractérisé par** un circuit de détection de codage (46) connecté à la sortie du filtre passe-haut (20), qui dérive de la distance temporelle de variations de signal de même type successives la vitesse en baud et/ou le codage binaire du protocole de transmission de données utilisé.

17. Dispositif selon une des revendications 10 à 16, **caractérisé en ce qu'**un capteur optoélectrique d'un modem récepteur comprend une diode électroluminescente (12).

18. Dispositif selon la revendication 17, **caractérisé en ce que** la diode électroluminescente (12) fonctionne comme émetteur dans les phases d'émission du modem optoélectrique.

19. Dispositif selon une des revendications 10 à 18, **caractérisé en ce qu'**il collabore avec une partie modem d'un compteur de consommation de chaleur, d'eau, d'électricité et de coûts de chauffage.
